# EUROPEAN PATENT APPLICATION

(11) **EP 4 349 777 A1**
(43) Date of publication of application: **10.04.2024**
(21) Application number: 22816421.6
(22) Date of filing: 31.05.2022
(51) Int. Cl.: C01B 25/455, H01M 10/0562, H01B 1/06

(54) **METHOD FOR PREPARING SULFIDE-BASED SOLID ELECTROLYTE**

(30) Priority: 31.05.2021 KR 20210069862; 30.05.2022 KR 20220066253
(71) Applicant: Solivis Inc., Seoul 04763 (KR)
(72) Inventor: SHIN, Dong Wook, Seongnam-si Gyeonggi-do 13559 (KR); LEE, Young Min, Seoul 01362 (KR); KIM, Sung Jae, Namyangju-si Gyeonggi-do 12109 (KR)
(74) Representative: HGF
(86) International application number: PCT/KR2022/007702
(87) International publication number: WO 2022/255762

(57) **Abstract**

A method of preparing a sulfide-based solid electrolyte according to embodiments comprises mixing a solvent and a precursor in a reactor. An open vacuum atmosphere may be formed within the reactor. The mixture inside the reactor may be caused to react by stirring or under conditions of applying ultrasonic waves while maintaining the open vacuum atmosphere within the reactor. Accordingly, a high-purity sulfide-based solid electrolyte may be prepared with high efficiency.

## Description

### Technical Field

The present invention relates to a method of preparing a sulfide-based solid electrolyte, and more specifically, to a method of preparing a sulfide-based solid electrolyte performed under an open vacuum atmosphere.

### Background Art

The technology of synthesizing electrolytes by preparing precursors in an amorphous phase through a high-energy mechanical milling process and by partially crystallizing the precursors was started by the Japanese Tatsumisago Group in 1999, and is known to be the most common synthesis method of preparing electrolytes to date. However, this method is not suitable as a technology for mass production of solid electrolytes due to disadvantages that a lot of time was required for amorphization, productivity was low because an amount that could be synthesized in a single batch was extremely limited, and the process cost was very high.

Afterwards, in 2013, a solution synthesis method that could replace the existing mechanical milling process was reported. The solution synthesis method is a method of forming a β-Li₃PS₄ phase by dissolving precursor materials in an organic solvent such as THF in an inert atmosphere, stirring the mixed solution for about 24 hours, removing a supernatant layer through centrifugation, and drying only a reaction product. However, there is a limitation in that other phases other than the stable β-Li₃PS₄ phase cannot be formed. Meanwhile, after the Japanese Tatsumisago Group synthesized argyrodite Li₆PS₅Cl by using an organic solvent in 2019, several manufacturers have been synthesizing solid electrolytes by using organic solvents. Such a solution synthesis method is a relatively more advantageous synthesis method when it comes to solving various problems including slightly reducing the process time compared to the mechanical milling process method and to mass production. However, the time required for synthesis is still long and process steps are very complicated, and thus this technology alone is not yet ready for mass production. In addition, there is a problem that the performance of a synthesized material is significantly low compared to a material synthesized by a mechanical milling process.

Accordingly, there is a need for a synthesis method to synthesize compounds with high purity while requiring a short reaction time.

### Disclosure

### Technical Problem

One object of the present invention is to provide a method of preparing a sulfide-based solid electrolyte with high purity and high efficiency.

One object of the present invention is to provide a sulfide-based solid electrolyte prepared with high purity and high efficiency.

One object of the present invention is to provide a sulfide-based all-solid-state battery prepared with high purity and high efficiency.

The technical problems of the present invention are not limited to the aforementioned technical problems, and other technical problems not mentioned above will be clearly understood by those skilled in the art by referring to the following description.

### Technical Solution

A method of preparing a sulfide-based solid electrolyte according to embodiments includes: mixing a solvent and a precursor in a reactor; forming an open vacuum atmosphere in the reactor; and reacting the mixture inside the reactor by stirring or under conditions of applying ultrasonic waves while maintaining the open vacuum atmosphere within the reactor.

### Advantageous Effects

According to embodiments, when a reaction mixture is reacted by stirring or under conditions of applying ultrasonic waves while maintaining an open vacuum atmosphere, bubbles may continuously be generated within the reaction mixture during the reaction. The generation of bubbles may promote mixing and contact between reactants, thereby increasing a synthesis rate of a sulfide-based solid electrolyte and obtaining a sulfide-based solid electrolyte with high purity.

According to embodiments, a sulfide-based all-solid-state battery with excellent electrical properties including discharge capacity, charge/discharge efficiency, and capacity retention rate may be prepared with high efficiency by using the sulfide-based solid electrolyte prepared according to the method disclosed herein.

However, the effects of the present invention are not limited to the aforementioned effects, and other effects not mentioned above will be clearly understood by those skilled in the art by referring to the following description. Description of Drawings
FIG. 1 is a schematic flowchart explaining a method of preparing a sulfide-based solid electrolyte according to some embodiments.
FIG. 2 is a schematic flowchart explaining a method of preparing a sulfide-based solid electrolyte according to some embodiments.
FIG. 3 is a photograph showing a color change of a reaction solution according to a reaction time when performing a method of preparing a sulfide-based solid electrolyte of an example.
FIG. 4 is a graph showing results of thermogravimetry-differential thermal analysis (TG-DTA) on a sample before being crystallized.
FIG. 5 is a graph showing results of X-ray diffraction (XRD) for a crystallized sample.
FIG. 6 is a graph showing results of measuring ion conductivity of a sulfide-based solid electrolyte of Example 1.
FIG. 7 is a graph showing XRD patterns for sulfide-based solid electrolytes of Examples 9 and 10.
FIG. 8 is a graph showing XRD patterns for sulfide-based solid electrolytes of Examples 1 and 11.

### Best Mode

A method of preparing a sulfide-based solid electrolyte according to embodiments includes: mixing a solvent and a precursor in a reactor; forming an open vacuum atmosphere in the reactor; and reacting the mixture inside the reactor by stirring or under conditions of applying ultrasonic waves while maintaining the open vacuum atmosphere within the reactor.

In some embodiments, the reacting of the mixture may be performed in such a state that the temperature is raised up to or lower than a boiling point of the solvent.

In some embodiments, the maintaining of the open vacuum atmosphere may be performed by removing gas generated within the reactor.

In some embodiments, the method may further include crystallizing a reaction product by heat treatment, the reaction product resulting from the reacting of the mixture.

In some embodiments, bubbles may continuously be generated within the reactor until the end of the reacting of the mixture.

In some embodiments, the reacting of the mixture may be performed in a state in which the precursor is partially dissolved.

In some embodiments, the precursor may include alkali metal sulfide, alkali metal halide, and phosphorus pentasulfide.

In some embodiments, the solvent may include: a first solvent that has low solubility with respect to the alkali metal sulfide and the alkali metal halide; and a second solvent that at least partially dissolves the alkali metal sulfide and the alkali metal halide.

A sulfide-based solid electrolyte according to embodiments may be prepared by the method disclosed herein, and may include A₇₋ₓPS₆₋ₓHaₓ having an argyrodite crystalline phase. Here, A may be alkali metal, Ha may be a halogen element, and x may be 0.5 to 2.0.

In some embodiments, the sulfide-based solid electrolyte may exhibit ion conductivity of 1.0 X 10⁻³ S/cm to 10 X 10⁻³ S/cm.

A sulfide-based all-solid-state battery according to embodiments includes a cathode, a solid electrolyte layer, and an anode that are sequentially stacked, wherein at least one of the cathode, the solid electrolyte layer, and the anode may include the sulfide-based solid electrolyte.

### Mode of Invention

According to embodiments of the present invention, provided is a method of preparing a sulfide-based solid electrolyte with high purity and high efficiency, the method including: mixing a solvent and a precursor in a reactor; forming an open vacuum atmosphere in the reactor; and reacting the mixture inside the reactor by stirring or under conditions of applying ultrasonic waves while maintaining the open vacuum atmosphere within the reactor.

In some embodiments, provide are a sulfide-based solid electrolyte with high purity and high ion conductivity prepared according to the method disclosed herein and a sulfide-based all-solid-state battery including the same.

The aforementioned objects, other objects, characteristics, and advantages of the present invention will be easily understood through the following preferred embodiments related to the attached drawings. However, the present invention is not limited to the embodiments described herein, and may be embodied in other forms. Rather, embodiments introduced herein are provided so that the disclosed content will be thorough and complete and the ideas of the present invention will be sufficiently conveyed to those skilled in the art.

In the description of each drawing, similar reference numerals are used for similar elements. In the accompanying drawings, the dimensions of structures are enlarged from the actual size for clarity of the present invention. The terms "first," "second," etc. may be used herein to describe various elements, but these elements should not be limited by these terms. These terms are only used to distinguish one element from another element. For example, a first element may be named a second element, and similarly, a second element may also be named a first component, without departing from the scope of the present invention. An expression used in the singular encompasses the expression of the plural, unless it has a clearly different meaning in the context.

It will be further understood that the terms "comprises" or "includes" when used in the present specification, specify the presence of stated features, integers, steps, operations, elements, components, or combinations thereof, but do not preclude the presence or addition of one or more other features, integers, steps, operations, elements, components, or combinations thereof. Additionally, when a part of a layer, film, region, plate, etc. is said to be "on" another part, the part of a layer, film, region, plate, etc. can be "directly on" the another other part, or intervening elements may be present therebetween. On the other hand, when a part of a layer, film, region, plate, etc. is said to be "under" another part, the part of a layer, film, region, plate, etc. can be "directly under" the another other part, or intervening elements may be present therebetween.

Unless otherwise specified, all numbers, values, and/or expressions used herein to express quantities of components, reaction conditions, polymer compositions, and formulations should be understood to be modified in all cases by the term "about" as these numbers are inherently approximate reflecting the various uncertainties of measurement encountered in obtaining these values, among other things. Additionally, when numerical ranges are disclosed herein, such ranges are continuous and, unless otherwise indicated, include all values from the minimum value to the maximum value of such range inclusively. Furthermore, when such a range indicates an integer, it includes all integers from the minimum value to the maximum value, unless otherwise indicated.

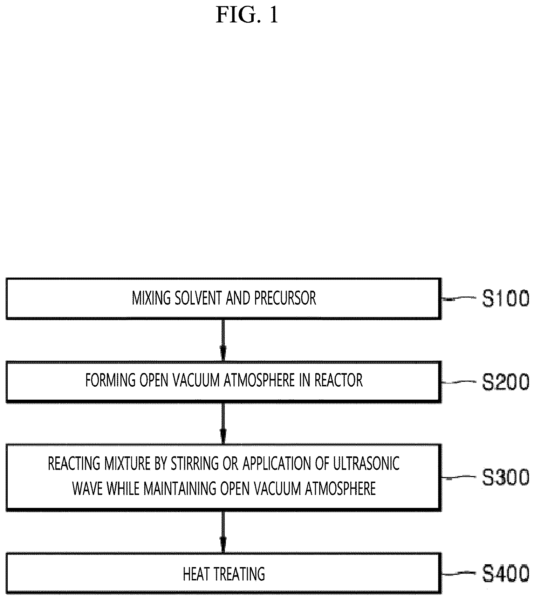

FIG. 1 is a schematic flowchart explaining a method of preparing a sulfide-based solid electrolyte according to some embodiments.

Referring to FIG. 1, the method of preparing a sulfide-based solid electrolyte according to embodiments includes: mixing a solvent and a precursor in a reactor (e.g., S100); forming an open vacuum atmosphere in the reactor (e.g., S200); and reacting the mixture inside the reactor by stirring or under conditions of applying ultrasonic waves while maintaining the open vacuum atmosphere within the reactor (e.g., S300).

The mixing of the solvent and the precursor in the reactor (S100) may be performed by: adding the solvent first into the reactor and then adding the precursor; adding the precursor first into the reaction and then adding the solvent; or mixing the solvent and the precursor and adding the mixture into the reactor.

The reactor may provide a condition to enable formation of open vacuum having a reduced pressure in an unsealed state after introduction of the reactants including the solvent and the pressure, and materials and shapes of the reactor are not limited. The open vacuum refers to a state in which the internal pressure is lowered in an unsealed space.

In some embodiments, the precursor may include alkali metal sulfide (A₂S, wherein A is alkali metal), alkali metal halide (AX, wherein X is a halogen), and phosphorus pentasulfide (P₂S₅). The alkali metal may include lithium, sodium, potassium, or a combination thereof. The halogen may include fluorine, chlorine, bromine, iodine, or a combination thereof.

In some embodiments, the alkali metal sulfide, the alkali metal halide, and the phosphorus pentasulfide may be mixed at a molar ratio of 4.5 to 5.5:0.5 to 1.5:1.5 to 2.5. For example, the alkali metal sulfide, the alkali metal halide, and the phosphorus pentasulfide may react at a stoichiometric molar ratio of 5:1:2.

In some embodiments, the solvent may include a first solvent that has low solubility with respect to the alkali metal sulfide and the alkali metal halide. Optionally, the solvent may further include a second solvent that at least partially dissolves the alkali metal sulfide and the alkali metal halide.

For example, the first solvent may include a nitrile-based solvent, an ether-based solvent, an ester-based solvent, or the like, and the nitrile-based solvent may include, for example, acetonitrile.

The second solvent may include an alcohol-based solvent, a carboxylic acid-based solvent, an ester-based solvent, a ketone-based solvent, an amine-based solvent, a sulfoxide-based solvent, or the like. For example, acetic acid, acetyl acetone, 2-aminoethanol, anisole, benzyl alcohol, 1-butanol, 2-butanol, 2-butanone, t-butyl alcohol, cyclohexanol, cyclohexanone, di-n-butyl phthalate, diethyl glycol, diglyme, dimethoxyethane, dimethylformamide, dimethyl phthalate, dimethyl sulfoxide, dioxane, ethanol, ether, ethyl acetate, ethyl acetoacetate, ethyl benzoate, ethylene glycol, glycerin, 1-heptanol, 1-hexanol, methanol, methyl acetate, methyl t-butyl ether, 1-octanol, 1-pentanol, 2-pentanol, 3-pentanol, 2-pentanone, 3-pentanone, 1-propanol, tetrahydrofuran, etc. may be included. Preferably, the second solvent may include acetone, 2-aminoethanol, anisole, benzyl alcohol, 1-butanol, 2-butanol, i-butanol, 2-butanone, t-butyl alcohol, cyclohexanol, cyclohexanone, dimethylformamide, ethanol, ether, 1-heptanol, 1-hexanol, methanol, methyl t-butyl ether, 1-octanol, 1-pentanol, 2-pentanol, 3-pentanol, 2-pentanone, 3-pentanone, 1-propanol, 2-propanol, tetrahydrofuran, etc., each including one oxygen element, so that the reaction of the alkali metal sulfide, the alkali metal halide, and the phosphorus pentasulfide may be effectively promoted, thereby forming a high-purity sulfide-based solid electrolyte.

In some embodiments, a sulfide-based solid electrolyte may be prepared by using only the first solvent without using the second solvent. In this case, the sulfide-based solid electrolyte may have improved purity and increased ion conductivity.

In some embodiments, when mixing the precursors, the alkali metal sulfide and the alkali metal halide may be mixed first in the first solvent, and the phosphorus pentasulfide may be additionally mixed secondarily.

In some embodiments, during the first mixing, the alkali metal sulfide and the alkali metal halide may be pre-stirred in the first solvent. In this case, the alkali metal sulfide and the alkali metal halide may be dissolved in the first solvent, so that unreacted reactants used in synthesis of the sulfide-based solid electrolyte may be reduced and the purity of a synthetic product may be increased. For example, the pre-stirring may be performed at about 500 rpm, and may be performed for 0.5 hours to 10 hours, 0.5 hours to 5 hours, 0.5 hours to 3 hours, or 0.5 hours to 2 hours.

In some embodiments, the pre-stirring may be performed at room temperature to 100 °C. As the temperature of the pre-stirring increases, the amount of impurities may decrease. Preferably, the pre-stirring may be performed at a temperature that does not exceed the boiling point of the first solvent and/or the second solvent, and for example, may be performed at 50 °C to 90 °C or 50 °C to 85 °C.

In some embodiments, when the second solvent is used together with the first solvent, the solubility of the alkali metal sulfide may be increased due to the second solvent, which is a polar solvent, and accordingly, the amount of the alkali metal sulfide, which is an impurity, contained in the final synthesized electrolyte may be reduced. However, when the second solvent is used together with the first solvent, oxide-based impurities may be generated, and in this regard, the second solvent needs to be included in an appropriate amount. For example, the weight of the second solvent included may be 0.005 % to 0.03 % of the weight of the first solvent.

When the second solvent is used together with the first solvent, the second solvent may be mixed during the first mixing.

The forming of the open vacuum atmosphere in the reactor (S200) may be performed by removing gas from the reactor. The removing of gas may be performed by using a conventional depressurization device. The open vacuum atmosphere may include, for example, a low-pressure atmosphere with an internal gas pressure of -0.1 MPa or less.

The reacting of the mixture inside the reactor by stirring or under conditions of applying ultrasonic waves while maintaining the open vacuum atmosphere within the reactor (S300) may be performed while maintaining an internal gas pressure of -0.1 MPa or less.

In some embodiments, the maintaining of the open vacuum atmosphere may be performed by removing gas generated within the reactor. For example, the open vacuum atmosphere may be maintained by continuously maintaining a low pressure in the reactor by using a depressurization device or the like during the reaction of the mixture. In this case, bubbles generated within the mixture by stirring or under conditions of applying ultrasonic waves may continue to form until the end of the reaction, and bulky bubbles may be formed. The mixing and contact between reactants may be promoted by the bubbles, thereby increasing the reaction rate.

In some embodiments, the stirring rate may be 800 rpm or more.

In some embodiments, the frequency of the ultrasonic waves may be 1 kHz to 100 kHz. Preferably, the frequency may be 1 kHz to 80 kHz, 1 kHz to 70 kHz, 1 kHz to 60 kHz, 5 kHz to 100 kHz, 5 kHz to 80 kHz, 5 kHz to 70 kHz, 5 kHz to 60 kHz, 10 kHz to 100 kHz, 10 kHz to 80 kHz, 10 kHz to 70 kHz, 10 kHz to 60 kHz, 15 kHz to 100 kHz, 15 kHz to 80 kHz, 15 kHz to 70 kHz, 15 kHz to 60 kHz, 20 kHz to 100 kHz, 20 kHz to 80 kHz, 20 kHz to 70 kHz, or 20 kHz to 60 kHz. In this case, the generation of bubbles may be promoted during the reaction of the mixture, thereby increasing the reaction rate and improving the purity of the reaction products.

In Comparative Example, when the open vacuum atmosphere is not maintained during the reaction of the mixture, bubbles may be generated only at the beginning of the reaction, and the generation of bubbles may end before the end of the reaction. In this case, the reaction may be difficult to maintain at an increased reaction rate, and for example, 12 hours or more may be required to end the reaction.

In some embodiments, when the mixture is reacted by stirring or under conditions of applying ultrasonic waves while maintaining the open vacuum atmosphere, bubbles may continuously be generated in the reactor until the end of the reaction of the mixture. Accordingly, the reaction for forming the sulfide-based solid electrolyte may be accelerated. For example, the reaction time may be shortened to 4 hours or less, 3 hours or less, 2 hours or less, 1 hour or less, 30 minutes or less, 20 minutes or less, 10 minutes or less, or 5 minutes or less. In detail, when ultrasonic waves are applied under conditions in which the open vacuum atmosphere is maintained during the reaction of the mixture, the reaction time may be shortened to 1 hour or less, 30 minutes or less, 20 minutes or less, 10 minutes or less, or 5 minutes or less.

In some embodiments, the reacting of the mixture may be carried out in such a state that the temperature is raised up to or lower than a boiling point of the solvent. For example, the reaction temperature conditions of the mixture may be from room temperature to the boiling point of the solvent, and may be 25 °C to 80 °C, 25 °C to 70 °C, 25 °C to 60 °C, 30 °C to 80 °C, 30 °C to 70 °C, 30 °C to 60 °C, 35 °C to 80 °C, 35 °C to 70 °C, 35 °C to 60 °C, 40 °C to 80 °C, 40 °C to 70 °C, or 40 °C to 60°C. In this case, the reaction rate of the reaction of the mixture may increase, and the purity of a produced sulfide-based solid electrolyte may increase.

In some embodiments, the reaction of the mixture may be performed with the precursor that is partially dissolved. Specifically, when the precursor is completely dissolved in the solvent, it may not react in a solution phase, but when the precursor is only partially dissolved in the solvent, it may react through liquid-phase synthesis using the solvent as a catalyst or reaction medium.

In some embodiments, the interior of the reactor may be maintained in the open vacuum atmosphere even after the reaction of the mixture is completed. In this regard, the solvent may be dried from the reaction product.

In some embodiments, the method of preparing a sulfide-based solid electrolyte may further include heat treating the reaction product of the reaction of the mixture for crystallization (e.g., S400).

The heat treatment may be performed at a temperature of 400 °C to 800 °C, 400 °C to 700 °C, 400 °C to 600 °C, 500 °C to 800 °C, 500 °C to 700 °C, or 500 °C to 600 °C.

The heat treatment may be performed in the open vacuum state or at a pressure lower than normal pressure, and may be performed for 5 hours to 30 hours. During the heat treatment, the remaining solvent may also be additionally removed at the same time as the crystalline phase is formed. The heat treatment may be performed in an inert gas atmosphere such as argon gas (Ar) or nitrogen gas (N₂).

In some embodiments, the heat treatment may include primary heat treatment and secondary heat treatment. The temperature at which the secondary heat treatment is performed may be higher than the temperature at which the primary heat treatment is performed.

The primary heat treatment may additionally induce volatilization of the solvent adsorbed on the surface of the particles that may remain in the reaction product. By the primary heat treatment, carbon among the elements of the remaining organic solvent may be converted into amorphous carbon, which has low electrical conductivity and is not involved in synthesis, thereby preventing crystalline carbon from being synthesized into a material with electrical conductivity. Accordingly, the stoichiometric ratio between the precursors may be maintained, and thus synthesis of structurally stable argyrodite may be induced. The primary heat treatment may preferably be performed at 100 °C or more at which the solvent may sufficiently be volatilized, and at 450°C or less at which amorphous carbon may undergo crystallization.

The secondary heat treatment may be performed under an inert gas atmosphere, such as CO, H₂, N₂, Ar, He, Ne, etc., for 1 hour to 24 hours at a temperature of 450 °C to 600 °C. By the secondary heat treatment, a solid electrolyte having a desired crystalline phase may be prepared. Such secondary heat treatment may be repeated as needed to strengthen the crystallinity.

In some embodiments, the preparation of a sulfide-based solid electrolyte may be performed in a glove box or dry room that is not exposed to moisture and oxygen.

The sulfide-based solid electrolyte according to embodiments may be prepared by the method disclosed herein, and may include A₇₋ₓPS₆₋ₓHaₓ having an argyrodite crystalline phase. Here, A may be alkali metal, Ha may be a single halogen element or multiple halogen elements, and x may be 0.5 to 2.0.

In some embodiments, the sulfide-based solid electrolyte may exhibit ion conductivity of 1.0 X 10⁻³ S/cm to 10 X 10⁻³ S/cm. In some embodiments, the sulfide-based solid electrolyte may exhibit ion conductivity of 1.0 X 10⁻³ S/cm to 10 X 10⁻³ S/cm, for example, 2.0 X 10⁻³ S/cm to 8.0 X 10⁻³ S/cm or 2.0 X 10⁻³ S/cm to 5.0 X 10⁻³ S/cm.

In some embodiments, the sulfide-based solid electrolyte may have diffraction peaks appearing in areas where a diffraction angle (2θ) of 15.5±0.5°, 18.0±0.5°, 25.5±0.5°, 30.0±0.5°, 31.5±0.5°, 40.0±0.5°, 45.5±0.5°, 48.0±0.5°, 53.0±0.5°, 55.0±0.5°, 56.5±0.5°, and 59.5±0.5° in an XRD spectrum.

A sulfide-based all-solid-state battery according to embodiments includes a cathode, a solid electrolyte layer, and an anode that are sequentially stacked, wherein at least one of the cathode, the solid electrolyte layer, and the anode may include the sulfide-based solid electrolyte.

An all-solid-state lithium battery including the sulfide-based solid electrolyte may include a cathode, a solid electrolyte layer, and an anode that are sequentially stacked. Here, the solid electrolyte layer may include a sulfide-based solid electrolyte, the cathode may be a mixture layer of particles of a cathode active material, the sulfide-based solid electrolyte, and particles of a conductive material particle, and the anode may be a mixture layer of particles of an anode active material, the sulfide-based solid electrolyte, and particles of a conductive material.

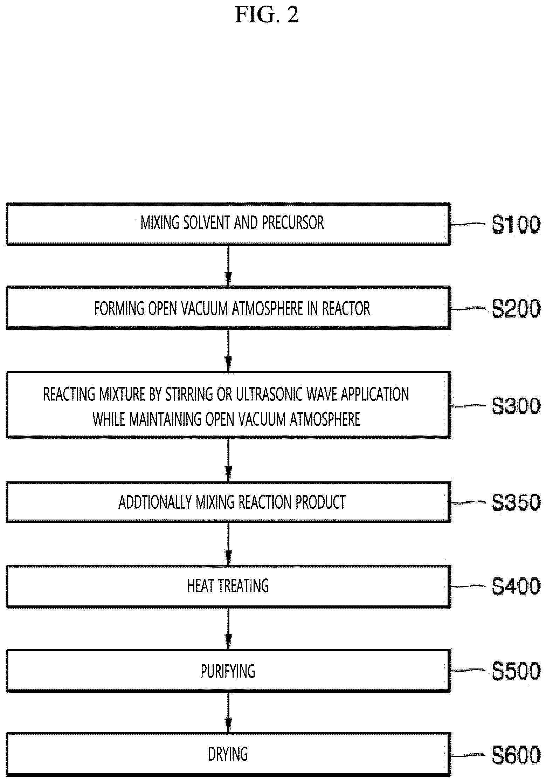

FIG. 2 is a schematic flowchart explaining the method of preparing a sulfide-based solid electrolyte according to some embodiments.

Referring to FIG. 2, the method of preparing a sulfide-based solid electrolyte according to embodiments includes: mixing a solvent and a precursor in a reactor (e.g., S100); forming an open vacuum atmosphere in the reactor (e.g., S200); reacting the mixture inside the reactor by stirring or under conditions of applying ultrasonic waves while maintaining the open vacuum atmosphere within the reactor (e.g., S300); additionally mixing the reaction product (e.g., S350); heat treating the reaction product for crystallization (e.g., S400); purifying a sample of the crystallized reaction product and adjusting the particle size (e.g., S500); and drying the sample to remove an organic solvent and resolve the agglomerated sample (e.g., S600).

Hereinafter, the same content as shown and described in FIG. 1 will not be repeatedly described, and the additionally mixing of the reaction product (e.g., S350), the purifying of the crystallized sample and controlling of the particle size (e.g., S500), and the drying of the sample to remove the organic solvent and resolve the agglomerated sample (e.g., S600) will be described.

The additionally mixing of the reaction product (e.g., S350) refers to additional mixing by collecting powder of dried reaction product, and may even out the distribution of particles in the sample that are adsorbed or aggregated and may make the particle size uniform. In addition, by additionally mixing the reaction product, the remaining solvent may be removed, and carbon which is an impurity contained in the solvent may be removed from the reaction product. Therefore, during the heat treatment, the synthesis of an electrolyte with a uniform composition that matches a stoichiometric ratio may be induced.

For example, the additional mixing of the reaction product may be performed by wet ball milling, and in some embodiments, may be performed by table ball milling, vertical-ball milling, planetary milling, bead milling, or the like. In some embodiments, the additional mixing of the reaction product may be performed by stirring, homogenizing, ultra-sonication, or the like.

A solvent used for the additional mixing of the reaction product may be the same as the solvent used in the formation of the mixture. In this regard, the solvent used for the additional mixing of the reaction product may include a nitrile-based solvent, an ether-based solvent, an ester-based solvent, or the like. In optional embodiments, the solvent used for the additional mixing of the reaction product may be an organic solvent that does not contain oxygen, such as heptane, n-heptane, or toluene.

Such additional mixing of the reaction product may be performed for 10 minutes to 2 hours, may be performed multiple times if necessary, and may be performed by alternately repeating wet mixing and drying mixing.

The purifying of the sample of the crystallized reaction product and controlling of the particle size (e.g., S500) is for further improvement of the purity of a synthesized sample, and accordingly, the size and shape of the particles may be adjusted. More specifically, by the purification, impurities remaining in the reaction product resulting from the mixing may be additionally removed, and weak bonds between secondary and tertiary particles may be broken by physical force, thereby controlling the particle size of the reaction product.

The purification may be performed by ball milling after the reaction product and the organic solvent are mixed. By the ball milling, impurities such as carbon on the surface of the reaction product may be removed and weak bonds between particles may be broken, thereby controlling the particle size of the reaction product. The reaction product that has gone through the purification may have increased brightness.

The ball milling may include various methods such as table ball milling, vertical-ball milling, planetary milling, bead milling, or the like. In some embodiments, mixing in the purification may be performed by stirring, homogenizing, ultra-sonication, or the like.

In some embodiments, the purification may be performed in either a wet condition or a dry condition. In a wet condition, a drying process may be included, and in a dry condition, a drying process is not included, but a resolving process may be additionally included instead. The drying process may be performed by alternately repeating a dry form and a wet form.

The drying of the sample to remove the organic solvent and resolve the agglomerated sample (e.g., S600) may be the final process in the synthesis. In detail, the organic solvent used in the purification may be dried, and the sample may be resolved to prevent the purified reaction product, whose particle size is adjusted through the purification, from re-aggregating by surface energy. For this purpose, simultaneous performance of drying at a temperature of the boiling point or below of the organic solvent with the resolving may be required. That is, the drying may be performed by continuously supplying energy at a low temperature. For example, the drying may refer to vacuum drying after the purified reaction product is centrifuged. In some embodiments, the drying may include resolving, following a method of drying by applying energy such as blade stirring, or general drying methods such as hot-air drying, freeze drying, spray drying, or the like.

Hereinafter, the present invention will be described in more detail with reference to the following examples. The following examples are merely examples to aid understanding of the present invention, and the scope of the present invention is not limited thereto.

### Example 1: Preparation of sulfide-based solid electrolyte

Li₆PS₅Cl was synthesized by using precursors Li₂S, LiCl, and P₂S₅. The total amount of precursors was 5 g. Among various organic solvents available, 100 ml of acetonitrile and 0.013 g of isopropanol were used.

75 ml of acetonitrile, Li₂S, and LiCl were added in proportion to a reactor and mixed with isopropanol. After pre-stirring at 50 °C for 1 hour, P₂S₅ and 25 ml of acetonitrile were added thereto. Here, Li₂S, P₂S₅, and LiCl were used at a molar ratio of about 5:1:2.

After sealing the reactor and gradually forming an open vacuum to prevent the contents inside the reactor from boiling over, the reactor was placed in an ultrasonic thermostat set at 50 °C, which is a temperature lower than the boiling point of acetonitrile and isopropanol, while maintaining the open vacuum. Ultrasonic waves of about 40 kHz were applied to the thermostat, and the open vacuum, temperature, and ultrasonic waves conditions were maintained until the reaction solution turned white.

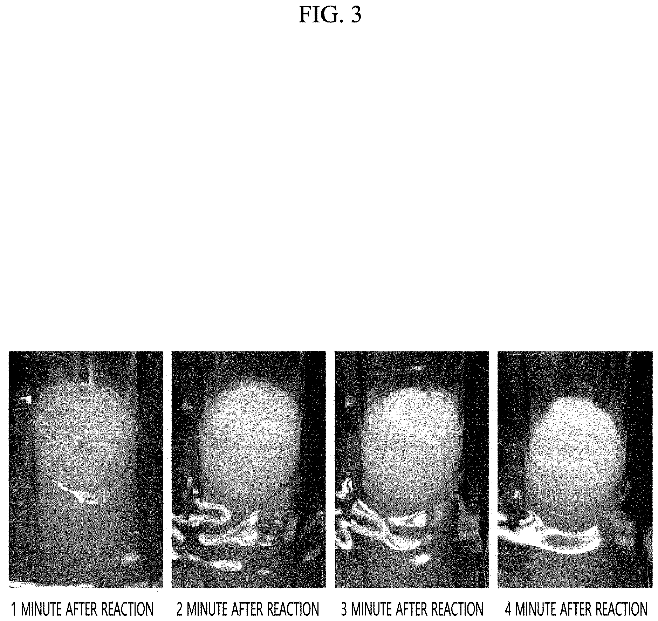

As a result, the generation of bubbles in the mixture solution continued for 5 minutes during the reaction, and as shown in FIG. 3, the color of the reaction solution gradually changed from blue-green to green tea, mustard, and then white. This was similar to the color change that occurs over several hours in the existing solution synthesis methods. Accordingly, it was confirmed that the reaction occurred effectively within a short time by this synthesis method.

After the synthesis was completed (after the color change was completed), the open vacuum system was continuously maintained to induce volatilization of the organic solvent, and then the reaction product was dried. After the drying, the reaction product in the reactor was collected in a glove box in an inert atmosphere, and subjected to heat treatment at 550 °C for 12 hours, so as to obtain a crystallized sulfide-based solid electrolyte.

### Experimental Example 1: Thermogravimetry-differential thermal analysis (TG-DTA)

TG-DTA was performed on a sample before crystallization of the solid electrolyte synthesized in Example 1.

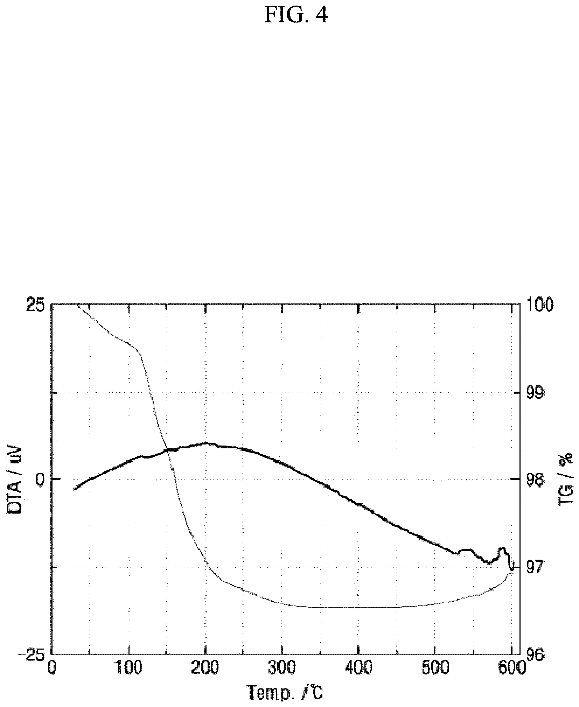

As shown in FIG. 4, it was confirmed that reaction peaks other than endothermic reaction peaks around 550 °C did not appear, wherein the temperature is the crystallization temperature of an argyrodite electrolyte, and that peaks around 220 °C related to stable materials such as Li₃PS₄ did not appear. These results indicate that the binding between the precursors was properly achieved.

### Experimental Example 2: X-ray diffraction (XRD)

XRD was performed on the crystallized sample synthesized in Example 1.

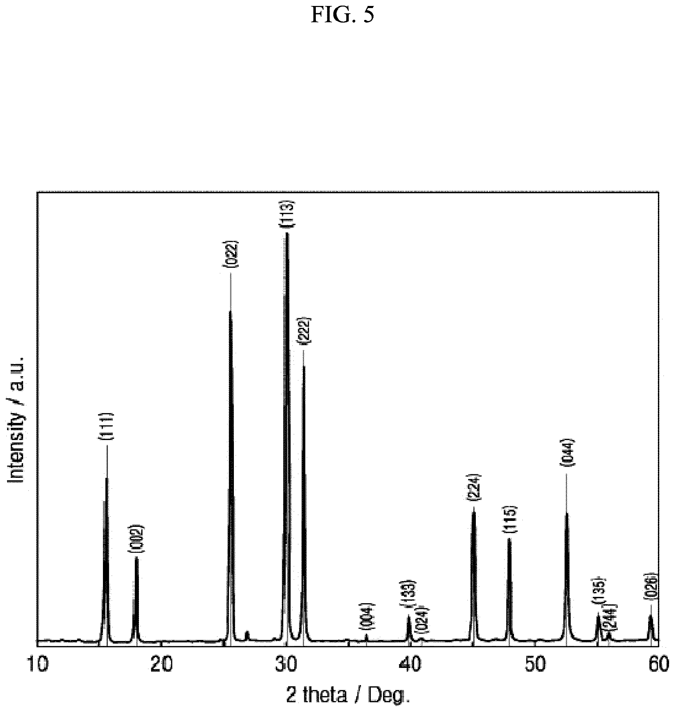

As shown in FIG. 5, diffraction peaks appeared in areas where a diffraction angle (2θ) of 15.5±0.5°, 18.0±0.5°, 25.5±0.5°, 30.0±0.5°, 31.5±0.5°, 40.0±0.5°, 45.5±0.5°, 48.0±0.5°, 53.0±0.5°, 55.0±0.5°, 56.5±0.5°, and 59.5±0.5° in an XRD spectrum. These peaks were substantially the same as Li₆PS₅Cl showing high ion conductivity, indicating that the solid electrolyte synthesized in Example 1 had an argyrodite phase having a cubic crystal structure with high ion conductivity.

As a result of Rietveld analysis based on the XRD results, it was confirmed that the sulfide-based solid electrolyte of Example 1 had a purity of 97.9 % and contained impurities of 1.0 % Li₃PO₄, 1.0 % Li₂S, and 0.1 % LiCl.

### Experimental Example 3. Measurement of ion conductivity

Electrochemical impedance spectroscopy (EIS) was performed to measure the ion conductivity of the solid electrolyte synthesized in Example 1.

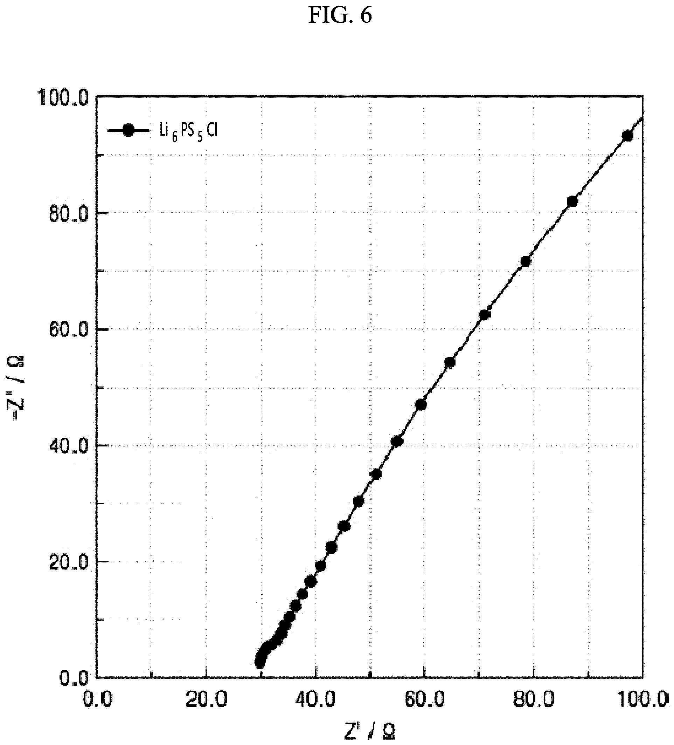

As shown in FIG. 6, the ion conductivity of the solid electrolyte synthesized in Example 1 was 3.2 X 10⁻³ S/cm. This result indicates that the solid electrolyte prepared as in Example 1 had higher ion conductivity than a solid electrolyte prepared by the existing solution synthesis methods.

### Comparative Example

A sulfide-based solid electrolyte was prepared in the same manner as in the example, except that an initial open vacuum was formed inside a reactor where a solvent and precursors were mixed, and that no additional opening the vacuum in reduced pressure was performed during a reaction of the mixture.

During the preparation process of the comparative example, it was confirmed that, before the color change of the reaction mixture was completed, the generation of bubbles ended rapidly or the size of bubbles decreased significantly. Considering that it took 4 hours for the reaction to end, it was confirmed that the reaction speed was significantly slowed.

### Example 2

A sulfide-based solid electrolyte was prepared in the same manner as Example 1, except that 2-butanol was used instead of isopropyl alcohol.

It was confirmed that the obtained sulfide-based solid electrolyte had a purity of 97.3 % and contained impurities of 1.7 % Li₃PO₄, 0.8 % Li₂S, and 0.1 % LiCl.

### Example 3

A sulfide-based solid electrolyte was prepared in the same manner as Example 1, except isopropyl alcohol was not used.

It was confirmed that the obtained sulfide-based solid electrolyte had a purity of 98.3 % and contained impurities of 0.3 % Li₃PO₄, 1.2 % Li₂S, and 0.1 % LiCl.

### Examples 4 to 6

A sulfide-based solid electrolyte was prepared in the same manner as Example 1, except that the mixture of 75 ml of acetonitrile, Li₂S, LiCl, and isopropanol was not stirred before the addition of P₂S₅ and 25 ml of acetonitrile thereto (Example 4), or the mixture was pre-stirred at 50 °C or more to less than 100 °C at 800 RPM or more for 1 hour (Example 5) or 24 hours (Example 6).

It was confirmed that the sulfide-based solid electrolyte of Example 4 had a purity of 97.4 % and contained impurities of 1.0 % Li₃PO₄, 1.0 % Li₂S, and 0.6 % LiCl, the sulfide-based solid electrolyte of Example 5 had a purity of 97.6 % and contained impurities of 0.5 % Li₃PO₄, 1.9 % of Li₂S, and 0.1 % of LiCl, and the sulfide-based solid electrolyte of Example 6 had a purity of 93.3 % and contained impurities of 3.6 % of Li₃PO₄, 0.7 % of Li₂S, and 2.4 % of LiCl.

Accordingly, it was confirmed that the amount of Li₃PO₄ and LiCl, which reduce the ion conductivity, could be reduced by pre-stirring at an appropriate level, and that, when the stirring time was excessively increased, the amount of Li₃PO₄ and LiCl was rather increased.

### Example 7

A sulfide-based solid electrolyte was prepared in the same manner as in Example 3, except that half of the moles of LiCl was replaced with an equal number of moles of LiBr.

It was confirmed that the obtained sulfide-based solid electrolyte had a purity of 98.2 % and contained impurities of 0.7 % Li₃PO₄ and 1.0 % Li₂S, and that LiCl and LiBr were not contained. As a result of XRD analysis, the same XRD pattern was identified as the XRD pattern in Example 3.

### Example 8

A sulfide-based solid electrolyte was prepared in the same manner as in Example 3, except that, instead of applying ultrasonic waves, the mixture in the reactor was stirred at 80 °C or less at 800 rpm or more for 12 hours. In this case, it took 4 hours for the color change to end, indicating the end of the reaction.

It was confirmed that the obtained sulfide-based solid electrolyte had a purity of 94.9 % and contained impurities of 1.9 % Li₃PO₄, 1.7 % Li₂S, and 1.5 % LiCl.

### Examples 9 and 10

A sulfide-based solid electrolyte was prepared in the same manner as in Example 1, except that the frequencies of the ultrasonic waves were changed to 25 kHz and 59 kHz, respectively.

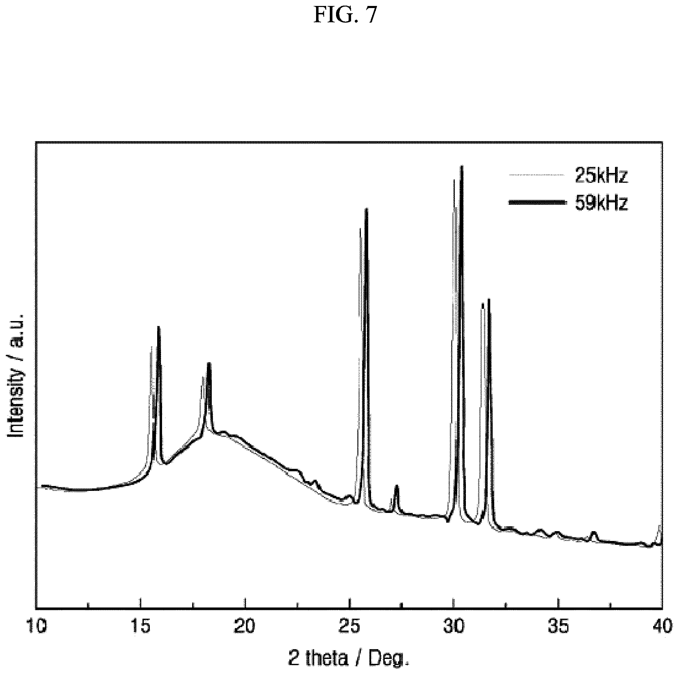

FIG. 7 is a graph showing XRD patterns for the sulfide-based solid electrolytes of Examples 9 and 10.

Referring to FIG. 7, it was confirmed that a sulfide-based solid electrolyte having the same crystal structure as Example 1 was prepared even when the frequencies of the ultrasonic waves were changed to 25 kHz and 59 kHz, and that more impurities were removed even when low frequency 25 kHz ultrasonic waves were applied.

### Example 11

A sulfide-based solid electrolyte was prepared in the same manner as in Example 1, except that the temperature of the pre-stirring was set to 100 °C.

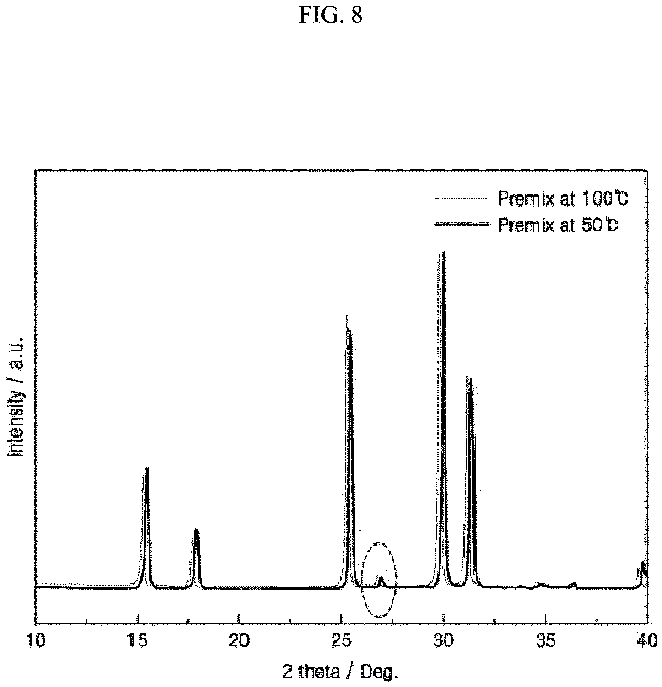

FIG. 8 is a graph showing XRD patterns for the sulfide-based solid electrolytes of Examples 1 and 11.

Referring to FIG. 8, it was confirmed even in Example 11 in which the pre-stirring was performed at a raised temperature that the same crystal structure was obtained as Example 1, and that the amount of impurities decreased as the pre-stirring temperature increased.

As such, the present disclosure has been described with reference to one embodiment shown in the drawings, but this is merely exemplary, and those skilled in the art will understand that various modifications and variations of the embodiment are possible therefrom. Therefore, the true technical scope of protection of the present disclosure should be determined by the technical spirit of the appended claims.

## Claims

1. A method of preparing a sulfide-based solid electrolyte, the method comprising:
mixing a solvent and a precursor in a reactor;
forming an open vacuum atmosphere in the reactor; and
reacting a mixture inside the reactor by stirring or applying ultrasonic waves while maintaining the open vacuum atmosphere within the reactor.

2. The method of claim 1, wherein the reacting of the mixture is performed in such a state that the temperature is raised up to or lower than a boiling point of the solvent.

3. The method of claim 1, wherein the maintaining of the open vacuum atmosphere is performed by removing gas generated within the reactor.

4. The method of claim 1, further comprising crystallizing a reaction product by heat treatment, the reaction product resulting from the reaction of the mixture.

5. The method of claim 1, wherein bubbles are continuously generated in the reactor until the end of the reaction of the mixture.

6. The method of claim 1, wherein the reacting of the mixture is performed in a state in which the precursor is partially dissolved.

7. The method of claim 1, wherein the precursor comprises alkali metal sulfide, alkali metal halide, and phosphorus pentasulfide.

8. The method of claim 7, wherein the solvent includes: a first solvent that has low solubility with respect to the alkali metal sulfide and the alkali metal halide; and a second solvent that at least partially dissolves the alkali metal sulfide and the alkali metal halide.

9. A sulfide-based solid electrolyte prepared by the method of claim 1, comprising A₇₋ₓPS₆₋ₓHaₓ having an argyrodite crystalline phase, wherein A is alkali metal, Ha is a halogen element, and x is 0.5 to 2.0.

10. The sulfide-based solid electrolyte of claim 9, wherein the sulfide-based solid electrolyte has an ion conductivity of 1.0 X 10⁻³ S/cm to 10 X 10⁻³ S/cm.

11. A sulfide-based all-solid-state battery comprising a cathode, a solid electrolyte layer, and an anode that are sequentially stacked, wherein the sulfide-based solid electrolyte of claim 9 is included in at least one of the cathode, the anode, and the solid electrolyte layer.
